(19) Europäisches Patentamt
European Patent Office
Office européen des brevets

(11) **EP 2 638 269 B1**

(12) **EUROPÄISCHE PATENTSCHRIFT**

(45) Veröffentlichungstag und Bekanntmachung des Hinweises auf die Patenterteilung:
**29.04.2015   Patentblatt 2015/18**

(21) Anmeldenummer: **12704394.1**

(22) Anmeldetag: **08.02.2012**

(51) Int Cl.:
*G01L 7/00* (2006.01)        *G06F 17/10* (2006.01)
*F02C 9/28* (2006.01)        *G05B 23/02* (2006.01)

(86) Internationale Anmeldenummer:
**PCT/EP2012/052094**

(87) Internationale Veröffentlichungsnummer:
**WO 2012/107467 (16.08.2012 Gazette 2012/33)**

(54) **VERFAHREN ZUR REGELUNG EINER GASTURBINE**

METHOD FOR CONTROLLING A GAS TURBINE

PROCÉDÉ DE RÉGULATION D'UNE TURBINE À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.02.2011  EP 11154149**

(43) Veröffentlichungstag der Anmeldung:
**18.09.2013   Patentblatt 2013/38**

(73) Patentinhaber: **Siemens Aktiengesellschaft 80333 München (DE)**

(72) Erfinder: **DEUKER, Eberhard 45481 Mülheim an der Ruhr (DE)**

(56) Entgegenhaltungen:
**EP-A2- 1 643 332     EP-A2- 1 926 001**

• E GARDNERJR: "Exponential smoothing: The state of the art-Part II", INTERNATIONAL JOURNAL OF FORECASTING, Bd. 22, Nr. 4, 1. Oktober 2006 (2006-10-01), Seiten 637-666, XP055002644, ISSN: 0169-2070, DOI: 10.1016/j.ijforecast.2006.03.005

**Beschreibung**

Die Erfindung betrifft ein Verfahren zur Regelung einer Gasturbine, wobei Messsignalwerte zu verschiedenen Zeitpunkten, nämlich zu zumindest einem ersten Zeitpunkt und einem zweiten Zeitpunkt gemessen werden, wobei der erste Zeitpunkt vor dem zweiten Zeitpunkt liegt und wobei gedämpfte Signalwerte aus den Messsignalwerten generiert werden, indem die gemessenen Messsignalwerte einer Glättung mit einem Dämpfungsfaktor unterzogen werden.

Eine Gasturbine ist eine Strömungsmaschine, die in der Regel einen Verdichter, eine Turbine und einen Brennkammerabschnitt umfasst. Im Verdichter wird angesaugte Umgebungsluft verdichtet und die verdichtete Luft schließlich dem Brennkammerabschnitt zugeführt. Im Brennkammerabschnitt ist wenigstens eine Brennkammer mit zumeist mehreren Brennern angeordnet, denen die verdichtete Luft zugeführt wird. Neben der verdichteten Luft wird den Brennern außerdem ein Brennstoff zugeführt, der mit der Luft vermischt und verbrannt wird. Die dabei in der Brennkammer entstehenden heißen Verbrennungsabgase werden der Turbine zugeführt, wo sie entspannen und abkühlen und dabei die Turbine in Rotation versetzen. Auf diese Weise wird die thermische Energie der Verbrennungsabgase in mechanische Arbeit umgewandelt, die einerseits zum Antreiben des Verdichters und andererseits zum Antreiben eines Verbrauchers, beispielsweise eines Generators zum Erzeugen von Strom eingesetzt wird.

Bei der Verbrennung in der Brennkammer ist darauf zu achten, dass eine stabile Flamme vorliegt. Instabilitäten der Flamme treten insbesondere aufgrund von resonanten Verbrennungsschwingungen im Verbrennungsabgas auf und können einerseits zu einem erhöhten Schadstoffausstoß führen und andererseits Schwingungen und Vibrationen der Brennkammer verursachen, welche die Lebensdauer der Brennkammer herabsetzen und Wartungsintervalle verkürzen.

Die Verbrennungsstabilität von Gasturbinen und anderen Feuerungsanlagen wird in der Regel anhand von zeitlich stark fluktuierenden Messsignalen beurteilt. Dies können beispielsweise Messsignale durch Beschleunigungs- oder Druckamplitudenmessung an der Brennkammer sein. Um nicht erwünschte hochfrequente Anteile zu unterdrücken, werden die Messsignale üblicherweise gedämpft. Jedoch treten in bestimmten Zeitabständen immer wieder Spitzen, nachfolgend als Peaks bezeichnet, im Höhenverlauf der Messung auf. Dies kann auch als "Lattenzaun"-Verlauf bezeichnet werden. Zwischen den Peaks sinkt die Höhe auf einen völlig unkritischen Wert. Ein einzelner Peak ist auch noch unkritisch. Wiederholen sich die Peaks aber, und nimmt entweder die Höhe der Peaks zu oder die Aufeinanderfolge der Peaks wird dichter, so deutet dies auf eine beginnende Instabilität hin.

Bisher werden zur Regelung meistens sogenannte Spitzenhaltewerte-Signale, auch Peakhold-Signale genannt, verwendet. Dabei wird für einen definierten Zeitraum nur die maximal aufgetretene Höhe als Signalwert weitergegeben. Dieses Signal liefert aber keine Information über die Wiederholfrequenz der Peaks. Ist das Zeitfenster groß, so wird der Regelung ein kritischer, hoher Amplitudenwert übermittelt, obwohl unter Umständen nur ein einzelner, ungefährlicher Peak vorhanden war. Ist das Zeitfenster sehr klein, so dass pro Zeitfenster maximal ein Peak zu erwarten ist, so wechseln hohe und niedrige Signale in rascher Folge, was zu einer unruhigen und oft sehr uneffizienten Regelung führt.

Die EP 1 926 001 A2 offenbart ein Verfahren zur Regelung einer Gasturbine, wobei Messsignalwerte zu einem ersten und zweiten Zeitpunkt gemessen werden und die Messsignalwerte einer exponentiellen Glättung mit einem Dämpfungsfaktor unterzogen werden.

Aufgabe der Erfindung ist es, ein Verfahren zur Regelung einer Gasturbine anzugeben, welches die oben beschriebenen Nachteile vermeidet.

Erfindungsgemäß wird diese Aufgabe gelöst durch die Angabe eines Verfahrens zur Regelung einer Gasturbine, wobei Messsignalwerte zu verschiedenen Zeitpunkten, nämlich zu zumindest einem ersten Zeitpunkt und einem zweiten Zeitpunkt gemessen werden. Dabei liegt der erste Zeitpunkt vor dem zweiten Zeitpunkt. Es werden gedämpfte Signalwerte aus den Messsignalwerten generiert, indem die gemessenen Messsignalwerte einer Glättung mit einem Dämpfungsfaktor unterzogen werden. Abhängig von der Differenz des Messsignalwertes zum zweiten Zeitpunkt und des gedämpften Signalwertes zum ersten Zeitpunkt wird ein unterschiedlicher Dämpfungsfaktor herangezogen. Damit werden Signalwerte gebildet, welche sowohl auf die Amplitudenhöhe als auch auf die Wiederholfrequenz der Peaks reagieren. Damit ist eine effiziente Regelung möglich. Die Glättung ist eine exponentielle Glättung. Damit können besonders gut Zeitreihenwerte geglättet werden, welche keine Systematik erkennen lassen.

Vorteilhafte Weiterbildungen der Erfindung sind in den abhängigen Ansprüchen definiert.

Vorteilhafterweise wird der gedämpfte Signalwert aus der Summe zweier Produkte gebildet, wobei das erste Produkt die Multiplikation des Dämpfungsfaktors mit dem zu dem zweiten Zeitpunkt gemessenen Messsignalwert ist und das zweite Produkt die Multiplikation des Differenzwertes eins minus dem Dämpfungsfaktor mit dem gedämpften Signalwert zu dem ersten Zeitpunkt ist. Diese ist besonders einfach zu realisieren.

In besonders bevorzugter Ausgestaltung wird ein höherer Dämpfungsfaktor (=schwache Dämpfung) verwendet, wenn der zu dem zweiten Zeitpunkt gemessene Messsignalwert größer oder gleich dem gedämpften Signalwert zum ersten Zeitpunkt ist, als wenn der zu dem zweiten Zeitpunkt gemessene Messsignalwert kleiner dem gedämpften Signalwert zum ersten Zeitpunkt ist.

Ein plötzlich auftretender Peak sorgt im seinem Anstieg daher für eine schwache Dämpfung, das heißt der Dämpfungsfaktor ist hoch, so dass die gedämpften Signalwerte während des Peakanstiegs rasch ansteigen. Beim Abfall des Peaks wird ein Umschalten auf eine starke Dämpfung ausgelöst, das heißt der Dämpfungsfaktor ist niedrig. Die gedämpften Signalwerte fallen daher nur langsam ab.

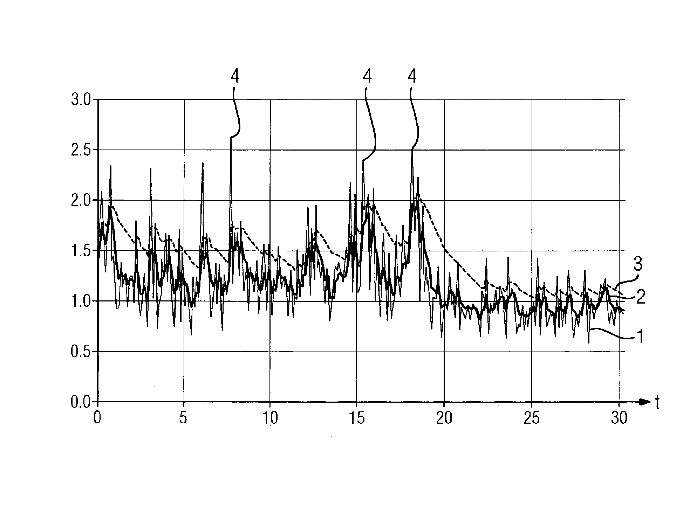

Weitere Merkmale, Eigenschaften und Vorteile der vorliegenden Erfindung ergeben sich aus der nachfolgenden Beschreibung eines Ausführungsbeispiels unter Bezugnahme auf die beiliegende Figur.

Die Figur zeigt ein Diagramm in welchem das Messsignal, der nach dem Stand der Technik gedämpfte Signalwert sowie der nach der Erfindung gedämpfte Signalwert über der Zeit t aufgetragen wurden.

Die Figur zeigt eine Kurve 1 mit Messsignalwerten, welche über die Zeit t auftragen wurde. Der Verlauf des Messsignals 1 weist Spitzen, nachfolgend als Peaks 4 bezeichnet, auf, die zunächst etwa alle zwei bis drei Sekunden auftreten. Messsignalwerte oberhalb von etwa 2.0 seien hier einmal als kritisch angesehen. Ist die Wiederholfrequenz dieser Peaks 4 entsprechend hoch, sollte ein Reglereingriff erfolgen. Zwischen der Zeit t=14 und der Zeit t=19 nimmt die Anzahl der Peaks 4 zu. Zur Zeit t=19 wurde eine Änderung des Betriebszustandes bewirkt. Die Kurve 1 mit den Messsignalwerten zeigt anschließend einen ausreichend ruhigen Verlauf.

In der Kurve 2 sind aus den Messsignalwerten der Kurve 1 nach dem Stand der Technik gedämpfte Signalwerte generiert worden, welche über die Zeit t auftragen wurden. Durch die Dämpfung nach dem Stand der Technik werden die hochfrequenten Anteile vermieden. Die Kurve 2 fällt jedoch zwischen den Peaks 4 immer wieder stark ab. Für die nach dem Stand der Technik gedämpften Signalwerte in Kurve 2 lässt sich jedoch kein Wert angeben, der eindeutig zwischen kritisch und nicht kritisch entscheidet: Werte zwischen 0.95 und 1.15 treten sowohl in der kritischen Phase bis zur Zeit t=19 als auch in der ruhigen Phase danach auf. Eine effiziente Regelung ist daher nicht möglich.

Die Kurve 3 wurde mit dem erfindungsgemäßen Verfahren erzeugt. Dabei werden Messsignalwerte $M_{n1}$, $M_{n2}$ zu verschiedenen Zeitpunkten n1, n2 nämlich zu zumindest einem ersten Zeitpunkt n1 und einem zweiten Zeitpunkt n2 gemessen, wobei der erste Zeitpunkt n1 vor dem zweiten Zeitpunkt n2 liegt. Die gemessenen Messsignalwerte $M_{n1}$ und $M_{n2}$ werden einer exponentiellen Glättung mit einem Dämpfungsfaktor $\lambda$ unterzogen. Dadurch werden Signalwert $S_{n1}$ und $S_{n2}$ generiert. Es wird dabei ein höherer Dämpfungsfaktor $\lambda$ verwendet, wenn der zu dem zweiten Zeitpunkt n2 gemessene Messsignalwert $M_{n2}$ größer oder gleich dem gedämpften Signalwert $S_{n1}$ zum ersten Zeitpunkt n1 ist, als wenn der zu dem zweiten Zeitpunkt n2 gemessene Messsignalwert $M_{n2}$ kleiner dem gedämpften Signalwert $S_{n1}$ zum ersten Zeitpunkt n1 ist.

Diese exponentielle Glättung wird durch nachfolgende Formel angegeben:

$$S_{n2} = \lambda_x * M_{n2} + (1 - \lambda_x) * S_{n1} \quad mit \quad x = 1,2$$

wobei gilt:

x=2 wenn $M_{n2} \geq S_{n1}$
x=1 wenn $M_{n2} < S_{n1}$
mit $\lambda_2 > \lambda_1$

Wobei $\lambda_x$, x=1,2 der Dämpfungsfaktor, $M_{n2}$ der gemessene Messsignalwert zum Zeitpunkt n2, $M_{n1}$ der gemessene Messsignalwert zum Zeitpunkt n1, $S_{n1}$ der gedämpfte Signalwert zum Zeitpunkt n1 und $S_{n2}$ der gedämpfte Signalwert zum Zeitpunkt n1 ist.

Bei den erfindungsgemäß gedämpften Signalwerten im Ausführungsbeispiel wurde beispielhaft $\lambda_2$ =0,3 und $\lambda_1$=0.05 gewählt. Nach einem Peak 4 fällt ein erfindungsgemäß gedämpfter Signalwert in Kurve 3 wesentlich langsamer ab als dies bei einem Signalwert in Kurve 2, der nach einem Verfahren des Stands der Technik gedämpft wurde, der Fall ist. Dies führt dazu, dass bei dem zeitlich darauffolgenden Peak 4 der erfindungsgemäß gedämpfte Signalwert höhere Werte erreicht als der nach dem Stand der Technik gedämpfte Signalwert. Dies ist ein für Regelungszwecke oft ein gewünschter Effekt. Zwischen der Zeit t=14 und der Zeit t=19 nimmt die Frequenz der Peaks 4 zu. Hier ist zu beobachten, dass die erfindungsgemäß gedämpften Signalwerte in diesem sehr kritischen Zeitfenster oberhalb von 1.5 bleiben, während die nach dem Stand der Technik gedämpften Signalwerte in Kurve 2 noch einmal auf fast 1.0 abfallen. Die erfindungsgemäß gedämpften Signalwerte hingegen fallen in der kritischen Zeit zwischen t=0 und t= 19 nie unter 1.3 und steigt anschließend in der unkritischen Zeit nie über 1.16. Ein plötzlich auftretender Peak 4 sorgt im seinem Anstieg daher für eine schwache Dämpfung, das heißt der Dämpfungsfaktor $\lambda$ ist hoch und die gedämpften Signalwerte werden während des Peakanstiegs daher rasch ansteigen. Bei dem Abfall des Peaks 4 wird ein Umschalten auf eine starke Dämpfung ausgelöst, das heißt der Dämpfungsfaktor $\lambda$ ist niedrig. Die gedämpften Signalwerte fallen daher nur langsam ab.

Mit dem erfindungsgemäßen Verfahren kann also eine effiziente Regelung einer Gasturbine bewerkstelligt werden, die sowohl schnell auf einen Peak reagiert (durch Umschalten auf schwache Dämpfung), aber auch eine rasche Aufeinanderfolge von Peaks kritischer bewertet als vereinzelte Peaks.

**Patentansprüche**

1. Verfahren zur Regelung einer Gasturbine, wobei Messsignalwerte ($M_{n1}$, $M_{n2}$) zu verschiedenen Zeitpunkten (n1, n2), nämlich zu zumindest einem ersten Zeitpunkt (n1) und einem zweiten Zeitpunkt (n2) gemessen werden, wobei der erste Zeitpunkt (n1) vor dem zweiten Zeitpunkt (n2) liegt und wobei gedämpfte Signalwerte ($S_{n1}$, $S_{n2}$) aus den Messsignalwerten ($M_{n1}$, $Mn_2$) generiert werden, indem die gemessenen Messsignalwerte ($M_{n1}$, $M_{n2}$) einer Glättung mit einem Dämpfungsfaktor ($\lambda$) unterzogen werden, wobei die Glättung eine exponentielle Glättung ist, **dadurch gekennzeichnet, dass**

   - abhängig von der Differenz des Messsignalwertes ($M_{n2}$) zum zweiten Zeitpunkt (n2) und des gedämpften Signalwertes ($S_{n1}$) zum ersten Zeitpunkt (n1) ein unterschiedlicher Dämpfungsfaktor ($\lambda$) zur Regelung herangezogen wird.

2. Verfahren zur Regelung nach Anspruch 1, **dadurch gekennzeichnet, dass** der gedämpfte Signalwert ($S_{n2}$) aus der Summe zweier Produkte (P1) und (P2) gebildet wird, wobei das erste Produkt (P1) die Multiplikation des Dämpfungsfaktors ($\lambda$) mit dem zu dem zweiten Zeitpunkt (n2) gemessenen Messsignalwert ($M_{n2}$) ist und das zweite Produkt (P2) die Multiplikation des Differenzwertes eins minus dem Dämpfungsfaktor ($\lambda$) mit dem gedämpften Signalwert ($S_{n1}$) zu dem ersten Zeitpunkt (n1) ist.

3. Verfahren zur Regelung nach einem der vorhergehenden Ansprüche, **dadurch gekennzeichnet, dass** ein höherer Dämpfungsfaktor ($\lambda$) herangezogen wird, wenn der zu dem zweiten Zeitpunkt (n2) gemessene Messsignalwert ($M_{n2}$) größer oder gleich dem gedämpften Signalwert ($S_{n1}$) zum ersten Zeitpunkt (n1) ist, als wenn der zu dem zweiten Zeitpunkt (n2) gemessene Messsignalwert ($M_{n2}$) kleiner dem gedämpften Signalwert ($S_{n1}$) zum ersten Zeitpunkt (n1) ist.

**Claims**

1. Method for regulating a gas turbine, wherein measurement signal values ($M_{n1}$, $M_{n2}$) are measured at different points in time (n1, n2), namely at at least a first point in time (n1) and a second point in time (n2), wherein the first point in time (n1) is located before the second point in time (n2) and wherein attenuated signal values ($S_{n1}$, $S_{n2}$) are generated from the measurement signal values ($M_{n1}$, $M_{n2}$), in that the measured measurement signal values ($M_{n1}$, $M_{n2}$) undergo a smoothing with an attenuation factor ($\lambda$), wherein the smoothing is an exponential smoothing, **characterised in that**

   - depending on the difference between the measurement signal value ($M_{n2}$) at the second point in time (n2) and the attenuated signal value ($S_{n1}$) at the first point in time (n1), a different attenuation factor ($\lambda$) is used for regulation.

2. Method for regulation according to claim 1, **characterised in that** the attenuated signal value ($S_{n2}$) is formed from the sum of two products (P1) and (P2), wherein the first product (P1) is the multiplication of the attenuation factor ($\lambda$) and the measurement signal value ($M_{n2}$) measured at the second point in time (n2) and the second product (P2) is the multiplication of the differential value one minus the attenuation factor ($\lambda$) and the attenuated signal value ($S_{n1}$) at the first point in time (n1).

3. Method for regulation according to one of the preceding claims, **characterised in that** a higher attenuation factor ($\lambda$) is used if the measurement signal value ($M_{n2}$) measured at the second point in time (n2) is larger or the same as the attenuated signal value ($S_{n1}$) at the first point in time (n1), than if the measurement signal value ($M_{n2}$) measured at the second point in time (n2) is smaller than the attenuated signal value ($S_{n1}$) at the first point in time (n1).

**Revendications**

1. Procédé de régulation d'une turbine à gaz, dans lequel on mesure des valeurs ($M_{n1}$, $M_{n2}$) de signal de mesure à des instants (n1, n2) différents, à savoir à au moins un premier instant (n1) et à un deuxième instant (n2), le premier instant (n1) étant avant le deuxième instant (n2), et on produit des valeurs ($S_{n1}$, $S_{n2}$) de signal amorties à partir des valeurs ($M_{n1}$, $M_{n2}$) de signal de mesure en soumettant les valeurs ($M_{n1}$, $M_{n2}$) de signal de mesure mesurées à un lissage par un facteur ($\lambda$) d'amortissement, le lissage étant un lissage exponentiel, **caractérisé en ce que**

   - en fonction de la différence de la valeur ($M_{n2}$) du signal de mesure au deuxième instant (n2) et de la valeur ($S_{n1}$) du signal amortie au premier instant (n1), on déduit, pour la régulation, un facteur ($\lambda$) d'amortissement différent.

2. Procédé de régulation suivant la revendication 1,
   **caractérisé en ce que**
   on forme la valeur ($S_{n2}$) de signal amortie à partir de la somme de deux produits (P1) et (P2), le produit (P1) étant la multiplication du facteur ($\lambda$) d'amortissement par la valeur ($M_{n2}$) de signal de mesure mesurée au deuxième instant (n2) et le deuxième produit (P2) étant la multiplication de la valeur de différence un moins le facteur ($\lambda$) d'amortissement par la valeur ($S_{n1}$) de signal amortie au premier instant (n1).

3. Procédé de régulation suivant l'une des revendications précédentes,
   **caractérisé en ce que**
   on utilise un facteur ($\lambda$) d'amortissement plus grand, si la valeur ($M_{n2}$) du signal de mesure mesurée au deuxième instant (n2) est supérieure ou égale à la valeur ($S_{n1}$) du signal amortie au premier instant (n1), que si la valeur ($M_{n2}$) de signal de mesure mesurée au deuxième instant (n2) est plus petite que la valeur ($S_{n1}$) du signal amortie au premier instant (n1).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1926001 A2